# EUROPEAN PATENT APPLICATION

(11) **EP 4 685 605 A1**
(43) Date of publication of application: **28.01.2026**
(21) Application number: 24837524.8
(22) Date of filing: 17.07.2024
(51) Int. Cl.: G05D 3/12, H02S 20/32

(54) **BRACKET CONTROL SYSTEM, FLEXIBLE TRACKING BRACKET, AND PHOTOVOLTAIC DEVICE**

(30) Priority: 07.06.2024 CN 202410735907
(71) Applicant: Arctech Solar Holding Co., Ltd., Jiangsu 215331 (CN)
(72) Inventor: YANG, Ying, Suzhou, Jiangsu 215331 (CN); ZHOU, Tao, Suzhou, Jiangsu 215331 (CN); SUN, Cheng, Suzhou, Jiangsu 215331 (CN)
(74) Representative: ABG Intellectual Property Law, S.L.
(86) International application number: PCT/CN2024/105916
(87) International publication number: WO 2025/251386

(57) **Abstract**

This application discloses a bracket control system, a flexible tracking bracket and a photovoltaic equipment. The control system controls the bracket, comprising a first controller connected to a first motor of a first bracket unit, a second controller wirelessly connected to the first controller and a second motor of a second bracket unit. The first controller drives the first motor on a first instruction and sends a second instruction to the second controller, which drives the second motor synchronously with the first motor on the received second instruction, and jointly adjust the angle of a flexible cable bearing structure. This application coordinates the angle control between the bracket units of the flexible tracking bracket, avoiding issues like layout difficulties, component distortion, fracture due to uneven terrain, optimizing adjustment efficiency and production cost, enabling the flexible tracking bracket adaptable to various terrains and expanding its application scenarios.

## Description

### FIELD OF THE DISCLOSURE

The present application relates to a field of photovoltaic control technology, and in particular to a bracket control system, a flexible tracking bracket and photovoltaic equipment.

### BACKGROUND

With the development of new energy technologies, the scale of the photovoltaic industry continues to expand. In order to obtain more sufficient solar energy, photovoltaic panels and other photovoltaic modules are often set up in areas with sufficient light intensity and long sunshine time. However, some areas suitable for establishing photovoltaic electric fields have problems such as large terrain changes. It is necessary to set up the brackets of photovoltaic equipment reasonably according to the terrain conditions, and photovoltaic flexible brackets have emerged. The existing photovoltaic flexible brackets are categorized into fixed photovoltaic flexible brackets and flexible photovoltaic tracking brackets. Flexible photovoltaic tracking brackets are increasingly favored by customers because they can track the angular position of the sun during the day and maximize the collected irradiation. A single-row flexible photovoltaic tracking bracket needs to be equipped with driving devices at least at two positions in a single row to drive the flexible bearing mechanism at the corresponding position to rotate, thereby driving the photovoltaic modules to rotate. An existing structural form is to synchronously transmit the power of the active driving device to other driving devices through a synchronous shaft of a mechanical structure. However, this structure is costly and complex. The synchronous shaft is prone to bending in large-span structures, posing a risk of failure and making it challenging to adapt to flexible photovoltaic tracking brackets with a large-span structure.

### SUMMARY OF THE INVENTION

In view of this, the present application provides a bracket control system, a flexible tracking bracket and a photovoltaic equipment, in order to reduce the cost and structural complexity of flexible tracking brackets.

In a first aspect, a bracket control system is provided. The bracket control system is applied to control a flexible photovoltaic tracking bracket, wherein a single row of the flexible photovoltaic tracking bracket comprises at least two bracket units and a flexible cable load-bearing structure arranged between two adjacent bracket units, wherein the bracket unit comprises a motor for adjusting an angle of the flexible cable load-bearing structure, and the bracket control system comprises: a first controller connected to a first motor of a first bracket unit; and a second controller wirelessly connected to the first controller and connected to a second motor of a second bracket unit; wherein the first controller is configured to drive the first motor to operate based on a first instruction received, and to send a second instruction to the second controller; and the second controller is configured to drive the second motor to operate synchronously with the first motor based on the second instruction received to jointly adjust the angle of the flexible cable load-bearing structure.

The above bracket control system solution coordinates and controls the first motor, the second controller and the second motor through the first controller, so as to complete the angle adjustment of the flexible cable load-bearing structure in the entire flexible tracking bracket, and avoids issues like difficulties in adjusting the angle of the bracket load-bearing structure by at least two bracket units in coordination due to the difference between the bracket units or due to the uneven terrain, which leads to distortion of bracket components, mechanical strain or even breakage. The solution ensures that the photovoltaic modules supported by the flexible tracking bracket are even when facing a specified angle, improving power generation efficiency, avoiding bending, and increasing service life. At the same time, the above bracket control system can replace the traditional mechanical structure of a synchronous shaft to synchronously transmit the power of the active driving device to other driving devices, further saving production costs.

Optionally, the first controller is singular, the first bracket unit is singular, and the first controller is connected to the first motor of the first bracket unit; and there are at least two second controllers and at least two second motors of second bracket units, wherein the at least two second controllers are connected to the at least two second motors of second bracket units in a one-to-one correspondence.

Optionally, the first controller and the second controller establish wireless communication through a LoRa wireless communication protocol, or through a Zigbee wireless communication protocol, or through a Bluetooth wireless communication protocol; and when there are at least two second controllers, and the first controller establishes wireless communication with the at least two second controllers through a Zigbee or a LoRa wireless communication protocol, wireless communication is established between at least two second controllers through a Zigbee or a LoRa wireless communication protocol.

The above bracket control system solution effectively applies appropriate wireless communication protocols, improving the communication reliability of the bracket control system in remote areas or areas with poor environmental conditions, avoiding complex wiring arrangements, and expanding the application scenarios of the bracket control system.

Optionally, the first controller is also used to send the second instruction based on a predefined time interval, and the second instruction includes: a start instruction, a rotation direction instruction or a rotation angle instruction.

Optionally, the second controller is also used to send parameter information to the first controller, and the parameter information includes: an actual rotation angle, a target rotation angle, a rotation direction, a motor current, a motor voltage or fault information.

Optionally, the first controller is also used to determine a failure state of the second controller, and the failure state includes: communication interruption, control disorder or machine damage; and the first controller sends a parameter acquisition instruction to the second controller, and receives parameter information of each second controller within a predefined time period, and the control disorder is determined based on the parameter information; and
when the first controller does not receive parameter information of one of the second controllers within the predefined time period, it is determined that the second controller is in a failure state, and the first controller sends a relay instruction to another second controller, wherein the relay instruction is used to instruct the other second controller to establish wireless communication with the second controller in a failure state; and
the first controller determines whether wireless communication is established between the other second controller and the second controller in a failed state, and when a wireless communication is established, it is determined that the second controller in a failure state is in a state of communication interruption with the first controller, and the other second controller transmits the parameter information of the second controller in a failure state to the first controller, and when a wireless communication is not established, it is determined that the second controller in a failure state is in a state of machine damage.

The above bracket control system solution can effectively monitor the working status of the second controller and its corresponding second motor through the first controller, and can promptly discover problems when communication interruption, control disorder or machine damage occurs, assisting operation and maintenance personnel to quickly complete troubleshooting.

Optionally, when the parameter information does not meet a predefined parameter criterion, the first controller resets the second controller; and when reset operations of the first controller reach a predefined count and the parameter information still does not meet the predefined parameter criterion, it is determined that the second controller is in a state of control disorder.

The above bracket control system solution can reduce control failures caused by factors such as line signal blocking or register capacity limitation, can restore the control function of the second controller to the greatest extent possible, improving the reliability of the entire system.

Optionally, the bracket control system further comprises a testing terminal, in wireless communication with the first controller and the second controller respectively, and used to configure device parameters of the first controller and to configure device parameters of the second controller.

In a second aspect, a flexible tracking bracket is provided, comprising: at least two bracket units, and a flexible cable load-bearing structure, arranged between two adjacent bracket units of the at least two bracket units; and the bracket control system according to the first aspect, connected to the at least two bracket units, which controls at least two motors of the at least two bracket units to operate synchronously and to jointly adjust an angle of the flexible cable load-bearing structure.

In a third aspect, a photovoltaic equipment is provided, comprising: one or more photovoltaic modules, and the flexible tracking bracket according to the second aspect for supporting the photovoltaic modules.

### BRIEF DESCRIPTION OF THE DRAWINGS

The following is a brief description of the drawings used to describe the embodiments of the present application:
FIG. 1 shows a schematic structural diagram of a single-row flexible tracking bracket provided in an embodiment of the present application;
FIG. 2 shows a schematic structural diagram of a bracket control system provided in an embodiment of the present application;
FIG. 3 shows a schematic diagram of a structure for testing multiple groups of bracket control systems provided in an embodiment of the present application;
FIG. 4 shows a schematic structural diagram of another flexible tracking bracket provided in an embodiment of the present application.

### DESCRIPTION OF THE ILLUSTRATED EMBODIMENTS

In order to more clearly illustrate the technical solutions in the embodiments of the present application, the specific implementation methods of the present application will be described below with reference to the accompanying drawings. The accompanying drawings described below are only some embodiments of the present application. For ordinary technicians in this field, other accompanying drawings or embodiments can be obtained based on these accompanying drawings or embodiments without paying creative work. The adjustments and improvements made without departing from the concept of the present application all belong to the protection scope of the present application.

In order to simplify the drawings, each figure only schematically shows the parts related to the embodiments, and they do not represent the actual structure of products. In addition, in order to simplify the drawings and facilitate understanding, in some figures, only a part of the components with the same structure or function is schematically drawn, and there may be more or less components with the same structure or function in reality.

In this application, unless otherwise clearly specified and limited, ordinal numbers, such as "first", "second", etc., are only used to distinguish and describe associated objects, and cannot be understood as indicating or implying the relative importance or order between associated objects; in addition, they do not represent the number of associated objects. "At least two" includes two or more, and other quantifiers are similar. "/" is used to describe the relationship between associated objects, which indicates the "or" relationship between associated objects. "And/or" is used to describe the relationship between associated objects, which includes any combination relationship between associated objects, such as "a and/or b" includes: "alone a", "alone b", or "a and b". "One or at least two" or "at least one" of at least two objects refers to any object or any combination of at least two objects, such as "one or at least two of a1, a2, a3" or "at least one of a1, a2, a3" includes: "alone a1", "alone a2", "alone a3", "a1 and a2", "a1 and a3", "a2 and a3" or "a1, a2 and a3".

With the development of new energy technologies, the scale of the photovoltaic industry continues to expand. In order to obtain more sufficient solar energy, photovoltaic modules are often set up in areas with sufficient light intensity and long sunshine time. However, some areas suitable for establishing photovoltaic power fields have the problem of large changes in terrain. It is necessary to reasonably set up the brackets of photovoltaic equipment according to the terrain conditions. The current mainstream photovoltaic tracking brackets usually use a straight main shaft (horizontal single shaft) and rely on the rotation of the main shaft to drive other photovoltaic modules to change the tracking angle, which makes it impossible to be installed and used in areas with significantly uneven terrain. In order to be able to utilize significantly uneven terrains, there are also flexible brackets in the prior art that do not use a main shaft but use steel cables between columns. However, due to the rugged terrains, the number of columns is extremely limited, and multiple steel cables are used between the columns. It is impractical to use a single control box of a horizontal single shaft to drive the entire bracket. Therefore, the construction of a flexible tracking bracket is remarkably difficult.

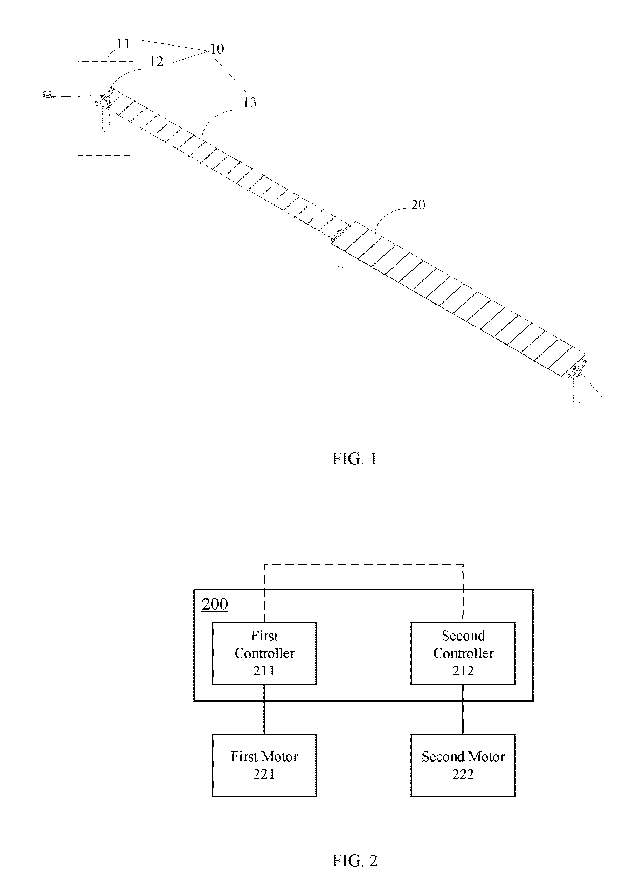

The following is a description with reference to the accompanying drawings:
Refer to FIG. 1, which is a schematic diagram of the structure of a single-row flexible photovoltaic tracking bracket provided in an embodiment of the present application. As shown in FIG. 1, the flexible photovoltaic tracking bracket 10 comprises: a bracket unit 11, and the flexible photovoltaic tracking bracket may comprise at least two bracket units 11. The bracket unit 11 comprises a motor 12, a rotary drive and an inclined beam. A flexible cable load-bearing structure 13 is installed between the inclined beams of two adjacent bracket units 11. When the motor 12 rotates, the inclined beam is driven to rotate through the rotary drive, and then the flexible cable load-bearing structure 13 on the upper part of the bracket that carries the photovoltaic modules 20 can be rotated. The flexible cable load-bearing structure 13 is used to install the photovoltaic modules. Since the position of the sun is changing during the day, in order to maximize the power generation, the photovoltaic modules are adjusted to track the position of the sun. However, the flexible photovoltaic tracking bracket often has a significant length, thus a row of photovoltaic modules installed on the flexible photovoltaic tracking bracket also has a significant length. It is difficult to carry out the angle adjustment of the entire row of photovoltaic modules by relying on one bracket unit 11. It requires the utilization of at least two bracket units 11 to complete the adjustment. Therefore, when it is necessary to adjust the angle of the row of photovoltaic modules, the motors 12 on the bracket units 11 can jointly assist in adjusting the angle of the flexible cable load-bearing structure, thereby changing the orientation of the row of photovoltaic modules 20.

Therefore, the embodiment of the present application controls the flexible photovoltaic tracking bracket, configures at least two wirelessly connected controllers to respectively control the motors of the flexible tracking bracket, so that at least two motors are driven synchronously, to adjust the angle of the flexible tracking bracket in coordination, thereby reducing the restrictions on the layout of the flexible tracking bracket due to terrain conditions, optimizing the entire bracket structure, removing the configuration of a synchronization shaft, reducing costs and reducing possible failure points, and improving the bracket control efficiency, optimizing the entire system structure, and reducing the cost of the bracket.

Refer to FIG. 2, which is a schematic diagram of the structure of a bracket control system provided in an embodiment of the present application. A bracket control system 200 is provided for controlling at least two bracket units 11 of a flexible photovoltaic tracking bracket 10, as shown in FIG. 2, comprising: a first controller 211, connected to a first motor 221 of the first bracket unit; a second controller 212, wirelessly connected to the first controller 211, and connected to a second motor 222 of the second bracket unit. The first controller 211 is configured to drive the first motor 221 to operate based on a received first instruction, and send a second instruction to the second controller 212. The second controller 212 is configured to drive the second motor 222 to operate synchronously with the first motor 221 based on the received second instruction, and jointly adjust the angle of the flexible cable load-bearing structure 13.

The first controller 211 can perform corresponding actions when an external control terminal sends the first instruction, wherein the first instruction may include: one or at least two of: a start instruction, an information acquisition instruction, a rotation direction instruction or a rotation angle instruction. For example, when the first instruction includes a start instruction, a rotation direction instruction and a rotation angle instruction, after receiving the first instruction, the first controller 211 controls the first motor 221 to start through a motor control algorithm pre-set inside the first controller 211, and controls the movement of the first motor 221 according to the rotation direction and rotation angle indicated by the first instruction, thereby driving the bracket components mechanically connected to the first motor 221 to rotate and adjust the angle of the flexible tracking bracket. At the same time, when the first controller 211 receives the first instruction, in order to complete the angle adjustment of the entire flexible tracking bracket and avoid problems of distortion, mechanical strain or even fracture of the bracket components due to a motor control angle deviation between at least two bracket units 11, the first controller 211 sends a second instruction to the second controller 212, and the second instruction may include: one or at least two of a start instruction, a rotation direction instruction or a rotation angle instruction. When the second controller 212 receives the second instruction, it synchronously adjusts the state of the second motor 222 driven by it. For example, if the first motor 221 is controlled to rotate forward 40 degrees, the second motor 222 will synchronously adjust 40 degrees or a predefined angle, such as 35 degrees, to ensure that the photovoltaic modules 20 supported by the flexible tracking bracket is even when facing a specified angle, thereby improving power generation efficiency, avoiding bending, and increasing service life.

The first controller 211 and the second controller 212 are connected wirelessly, sparing a synchronization shaft and avoiding complex wiring problems caused by wired connections between the two controllers. This further expands the setting options for the flexible tracking bracket and overcomes the wiring challenges and layout difficulties caused by uneven terrains.

The number of second controllers 212 can be at least two, and they can be wirelessly connected to the first controller 211 respectively. Therefore, when the first controller 211 controls the first motor 221 according to the first instruction, the first controller 211 sends a second instruction to the at least two second controllers 212, and the at least two second controllers 212 simultaneously or in a time-sharing manner control the second motors 222 controlled by them. For example, affected by factors such as terrain and the length of the photovoltaic modules, the first controller 211 needs to control at least two second controllers 212 in a time-sharing manner based on a preset time interval according to the first instruction to adjust the photovoltaic module angle of the flexible tracking bracket. After receiving the second instruction, a first second controller 212 adjusts a first second motor 222 to rotate to a first preset angle at a first moment, and a second second controller 212 adjusts a second second motor 222 to rotate to a second preset angle at a second moment after receiving the second instruction. After receiving the second instruction, a third second controller 212 adjusts a third second motor 222 to rotate to a third preset angle at a third moment after receiving the second instruction, and so on. At the same time, the rotation angle of the second motors 222 can be adjusted immediately after at least two second controllers 212 receive the second instruction.

In some embodiments, there are at least two second controllers 212 and at least two second bracket units, wherein the at least two second controllers 212 are connected to the at least two second bracket units in a one-to-one correspondence.

In some embodiments, the first controller 211 communicates with one or more second controllers 212 through a LoRa wireless communication protocol. LoRa wireless communication technology is a low-power wide area network communication technology, which is particularly suitable for application scenarios that require wide-area coverage and low power consumption. Because it uses spread spectrum technology, it can achieve ultra-long-distance wireless transmission, with a wide coverage range and strong penetration. It is suitable for field control scenarios for flexible tracking brackets to reduce the impact on communication establishment of environmental factors such as trees. In a scenario where at least two second controllers 212 need to establish communication with the first controller 211, based on the LoRa wireless communication protocol, at least two second controllers 212 are configured to establish wireless communication with the first controller 211 at the same time. The first controller 211 can send a second instruction to one or at least two second controllers 212 at the same time, and one or at least two second controllers 212 can also send information to the first controller 211 at the same time, and wireless communication can be established between at least two second controllers 212.

In some embodiments, the first controller 211 and one or more second controllers 212 communicate via a ZigBee wireless communication protocol. ZigBee wireless communication technology is mainly used for short-range, low-complexity, low-power, and low-data-rate bidirectional wireless communication. Since this technology is conducive to building a large-scale wireless connection array, the transmission distance can be extended from the standard 75 meters to hundreds of meters or even kilometers, and can be connected to other existing networks. Therefore, it can be applicable to the control scenario where a large number of flexible tracking brackets are set up in the photovoltaic field, and each flexible tracking bracket has at least two bracket units. Based on the ZigBee wireless communication protocol, when at least two second controllers 212 are configured, the first controller 211 can be connected to a first second controller 212, and the first second controller 212 can be connected to a second second controller 212, and the second second controller 212 can be connected to a third second controller 212, and so on. At least two second controllers 212 are wirelessly connected in sequence to establish the entire ZigBee controller array.

In some embodiments, the first controller 211 and one or more second controllers 212 establish wireless communication via a Bluetooth wireless communication protocol. Bluetooth wireless communication technology is mainly used to connect various mobile devices within a short distance, such as mobile phones, computers, etc. It supports the establishment of a continuous wireless connection, has low power consumption characteristics, and is suitable for IoT applications that require a long battery life. Based on the Bluetooth wireless communication protocol, when at least two second controllers 212 are configured, wireless communication can be established with the first controller 211 at the same time, and the first controller 211 can send a second instruction to one or at least two second controllers 212 at the same time, and one or at least two second controllers 212 can also send information to the first controller 211 at the same time.

One or more of the above LoRa wireless communication protocol, ZigBee wireless communication protocol and Bluetooth wireless communication protocol can be configured between the first controller 211 and one or more second controllers 212, such as establishing a connection only through the LoRa wireless communication protocol, ZigBee wireless communication protocol or Bluetooth wireless communication protocol, or such as establishing a connection through the ZigBee wireless communication protocol and the Bluetooth wireless communication protocol, or establishing a connection through the LoRa wireless communication protocol and the ZigBee wireless communication protocol.

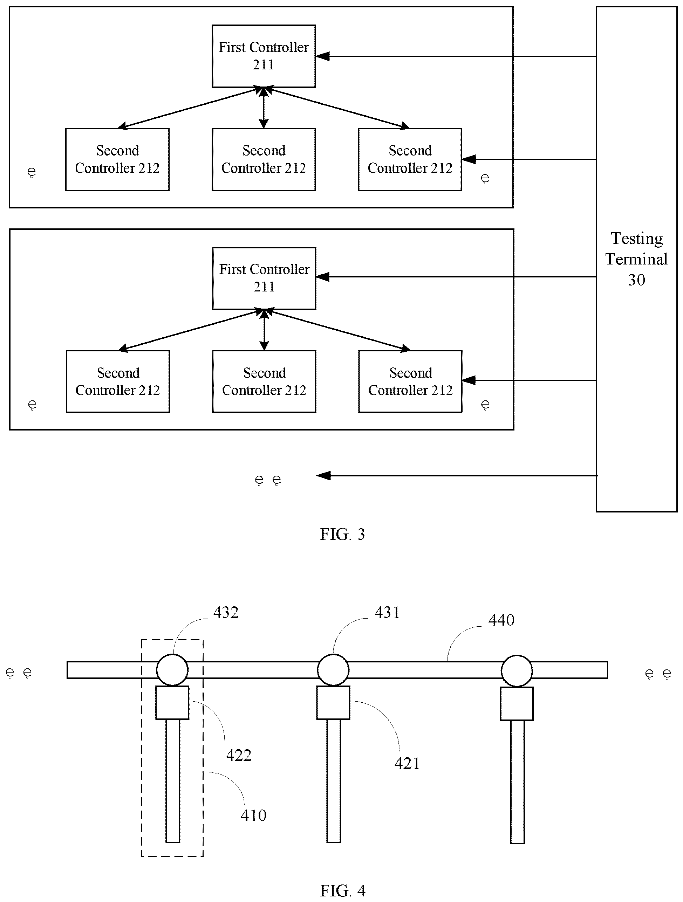

When testing the first controller 211 and one or more second controllers 212, the use of wireless communication can facilitate the staff to complete parameter settings or testing and other tasks. Referring to FIG. 3, it shows a schematic diagram of the structure of testing multiple bracket control systems provided by an embodiment of the present application. A testing terminal 30 can establish a wireless connection with the first controller 211 and the one or more second controllers 212 at the same time, or establish a wireless connection with the first controller 211 and the second controllers 212 in at least two bracket control systems at the same time. At the same time, wireless communication may not be established between different bracket control systems to prevent signal interference. During testing, the first controller 211 and the second controllers 212 receive testing information from the testing terminal 30. For example, the testing terminal 30 and the bracket control system use the Bluetooth wireless communication protocol to establish a wireless connection. When the bracket control system leaves the factory, the Bluetooth connection address information of the first controller 211 and the second controllers 212 is read, and the information is stored in a QR code or other readable information identification, which can be attached to the controller housing. During testing, the testing terminal 30 can scan or read the identification information on the housing to establish a connection with the first controller 211 or the second controllers 212 to modify parameters, to configure the device parameters of the first controller 211, and to configure the device parameters of the second controllers 212. Wherein, the testing terminal 30 can configure communication parameters for the first controller 211 separately to distinguish it from the second controllers 212, and during normal operations of the first controller 211, the testing terminal 30 can also adjust and configure the device parameters of the first controller 211 or the second controllers 212.

In some embodiments, one ore more second controllers 212 are further used to send parameter information to the first controller 211, wherein the parameter information includes: an actual rotation angle, a target rotation angle, a rotation direction, a motor current, a motor voltage or fault information.

Affected by factors such as terrain conditions and the size of the photovoltaic modules themselves, when the photovoltaic modules track the trajectory of the sun, the motors on at least two bracket units of the flexible tracking bracket need to rotate in time or synchronously to achieve an overall angle adjustment of the photovoltaic modules. In order to coordinate the synchronous operation of the first motor 221 and one or more second motors 222, the first controller 211 can obtain parameter information of the second motors 222 controlled by the second controllers 212. The second controllers 212 can send parameter information to the first controller 211 when the predefined trigger condition is met. The predefined trigger condition may include: a second motor 222 fails, an information acquisition instruction sent by the first controller 211 is received, or a predefined information feedback period is reached. The second controllers 212 can obtain parameter information of the second motors 222 through sensors or other information acquisition devices configured on the second motors 222. The parameter information may include: an actual rotation angle, a target rotation angle, a rotation direction, a motor current, a motor voltage or fault information. The fault information may include: a motor disconnection, a phase short circuit, a motor overload or other motor failures. Through the parameter information obtained by the first controller 211 from one or more second controllers 212, the first controller 211 can send corresponding control instructions. The first controller 211 can determine whether a second controller 212 has a fault according to the parameter information fed back by the second controllers 212. For example, when the parameter information shows that a second motor 222 or a second controller 212 has a fault, after an alarm is sent to the control center, the second motor 222 or the second controller 212 may be disconnected from the system according to the specific fault situation.

In some embodiments, the first controller 211 is further used to determine a failure state of the second controllers 212, and the failure state includes: a communication interruption, a control disorder; wherein the control disorder is determined based on the parameter information. When the parameter information does not meet a predefined parameter criterion, the first controller 211 resets the second controller 212; and when the number of reset operations of the first controller 211 reaches a predefined number and the parameter information still does not meet the predefined parameter criterion, it is determined that the second controller has a control disorder.

In the bracket control system, a second controller 212 may experience control failure due to factors such as line signal blocking or register capacity limitation. In this case, in order to ensure that the control of the flexible tracking bracket can be carried out smoothly, the first controller 211 can reset the second controller 212 and send the second instruction and other control instructions to the second controller 212 again to instruct the second motor 222 to operate. If the parameter information of the second motor 222 still does not meet the predefined parameter criterion after a predefined count of reset operations, it is determined that the failure state of the second controller 212 is a control disorder.

The first controller 211 is further configured to send a parameter acquisition instruction to a second controller 212. When the first controller 211 does not receive parameter information within a predefined acquisition time period, it is determined that the second controller is in a failure state.

Based on the previous embodiment, there are at least two second controllers 212; when the first controller 211 determines that a second controller 212 is in a failure state, the first controller 211 sends a relay instruction to another second controller 212, and the relay instruction is used to instruct the other second controller 212 to establish wireless communication with the second controller 212 in a failure state.

The first controller 211 is also used to determine whether another second controller 212 has established wireless communication with the second controller 212 in a failure state. When a wireless communication is established, it is determined that the second controller 212 in a failure state and the first controller 211 are in communication interruption, and the other second controller 212 transmits the parameter information of the second controller 212 in a failure state to the first controller 211; and when a wireless communication is not established, it is determined that the second controller in a failure state is in a state of machine damage, so that the cause of the failure between the second controller 212 and the first controller 211 can be accurately determined, which is convenient for engineers to deploy corresponding troubleshooting procedures.

Another second controller 212 can be any second controller 212 in the single-row flexible photovoltaic tracking bracket except the second controller 212 in a failure state. Preferably, the other second controller 212 is a second controller 212 adjacent to the second controller 212 in a failure state, thereby shortening the communication distance between the first controller 211 and the second controller 212 in a failure state, and eliminating communication failures caused by factors such as communication interference or distance attenuation.

Please refer to FIG. 4, which shows a schematic diagram of the structure of a flexible tracking bracket provided in some embodiments of the present application, wherein the flexible tracking bracket comprises: at least two bracket units 41, and a bracket control system provided in any of the above embodiments connected to at least two bracket units 41. In the flexible tracking bracket, a first controller 421 and the bracket unit 41 in which it is located can be installed in a middle position of the flexible tracking bracket, and one or at least two second controllers 422 and the bracket units 41 in which they are located can be placed symmetrically relative to the position of the first controller 421, or as close as possible to the position of the first controller 421, so as to ensure smooth communication between the first controller 421 and the at least two second controllers 422. Under the coordinated control of the first controller 421 and the second controllers 422, a first motor 431 and second motors 432 jointly adjust the angle of a flexible cable load-bearing structure 440, thereby adjusting the angle of the photovoltaic modules installed thereon.

Based on the same technical concept, the present application also provides a photovoltaic equipment, comprising: one or more photovoltaic modules, and a flexible tracking bracket provided in the above embodiments for supporting the photovoltaic modules.

It should be noted that the above embodiments can be freely combined as needed. The above are only preferred implementations of the present application. It should be pointed out that for ordinary technicians in this technical field, several improvements and modifications can be made without departing from the principles of the present application, and these improvements and modifications should also be regarded as the protection scope of the present application.

## Claims

1. A bracket control system, **characterized in that**
the bracket control system is configured to apply to control a flexible photovoltaic tracking bracket, wherein a single row of the flexible photovoltaic tracking bracket comprises at least two bracket units and a flexible cable load-bearing structure arranged between two adjacent bracket units, wherein the bracket unit comprises a motor for adjusting an angle of the flexible cable load-bearing structure, and the bracket control system comprises:
a first controller connected to a first motor of a first bracket unit; and
a second controller wirelessly connected to the first controller and connected to a second motor of a second bracket unit;
wherein the first controller is configured to drive the first motor to operate based on a first instruction received, and to send a second instruction to the second controller; and
the second controller is configured to drive the second motor to operate synchronously with the first motor based on the second instruction received to jointly adjust the angle of the flexible cable load-bearing structure.

2. The bracket control system according to claim 1, **characterized in that**
the first controller is singular, the first bracket unit is singular, and the first controller is connected to the first motor of the first bracket unit; and
there are at least two second controllers and at least two second motors of second bracket units, wherein the at least two second controllers are connected to the at least two second motors of second bracket units in a one-to-one correspondence.

3. The bracket control system according to claim 1, **characterized in that**
the first controller and the second controller establish wireless communication through a LoRa wireless communication protocol, or through a Zigbee wireless communication protocol, or through a Bluetooth wireless communication protocol; and
when there are at least two second controllers, and the first controller establishes wireless communication with the at least two second controllers through a Zigbee or a LoRa wireless communication protocol, wireless communication is established between at least two second controllers through a Zigbee or a LoRa wireless communication protocol.

4. The bracket control system according to any one of claims 1 to 3, **characterized in that**
the first controller is also used to send the second instruction based on a predefined time interval, and the second instruction includes: a start instruction, a rotation direction instruction or a rotation angle instruction.

5. The bracket control system according to claim 1, **characterized in that**
the second controller is also used to send parameter information to the first controller, and the parameter information includes: an actual rotation angle, a target rotation angle, a rotation direction, a motor current, a motor voltage or fault information.

6. The bracket control system according to claim 5, **characterized in that**
the first controller is also used to determine a failure state of the second controller, and the failure state includes: communication interruption, control disorder or machine damage; and
the first controller sends a parameter acquisition instruction to the second controller, and receives parameter information of each second controller within a predefined time period, and the control disorder is determined based on the parameter information; and
when the first controller does not receive parameter information of one of the second controllers within the predefined time period, it is determined that the second controller is in a failure state, and the first controller sends a relay instruction to another second controller, wherein the relay instruction is used to instruct the other second controller to establish wireless communication with the second controller in a failure state; and
the first controller determines whether wireless communication is established between the other second controller and the second controller in a failed state, and when a wireless communication is established, it is determined that the second controller in a failure state is in a state of communication interruption with the first controller, and the other second controller transmits the parameter information of the second controller in a failure state to the first controller, and when a wireless communication is not established, it is determined that the second controller in a failure state is in a state of machine damage.

7. The bracket control system according to claim 6, **characterized in that**
when the parameter information does not meet a predefined parameter criterion, the first controller resets the second controller; and
when reset operations of the first controller reach a predefined count and the parameter information still does not meet the predefined parameter criterion, it is determined that the second controller is in a state of control disorder.

8. The bracket control system according to claim 1, **characterized by** further comprising:
a testing terminal, in wireless communication with the first controller and the second controller respectively, and used to configure device parameters of the first controller and to configure device parameters of the second controller.

9. A flexible tracking bracket, **characterized by** comprising:
at least two bracket units;
a flexible cable load-bearing structure, arranged between two adjacent bracket units of the at least two bracket units; and
the bracket control system according to any one of claims 1 to 8, connected to the at least two bracket units, which controls at least two motors of the at least two bracket units to operate synchronously and to jointly adjust an angle of the flexible cable load-bearing structure.

10. A photovoltaic equipment, **characterized by** comprising:
one or more photovoltaic modules, and the flexible tracking bracket according to claim 9 for supporting the photovoltaic modules.
